# EUROPÄISCHE PATENTSCHRIFT

(11) **EP 2 129 988 B1**
(45) Veröffentlichungstag und Bekanntmachung des Hinweises auf die Patenterteilung: **23.05.2012**
(21) Anmeldenummer: 08716067.7
(22) Anmeldetag: 27.02.2008
(51) Int. Cl.: F28F 9/02

(54) **WÄRMETAUSCHER, ABGASRÜCKFÜHRSYSTEM, LADELUFTZUFÜHRSYSTEM UND VERWENDUNG DES WÄRMETAUSCHERS**
HEAT EXCHANGER, EXHAUST GAS RECIRCULATION SYSTEM, CHARGE AIR SUPPLY SYSTEM, AND USE OF SAID HEAT EXCHANGER
ÉCHANGEUR THERMIQUE, SYSTÈME DE RECYCLAGE DES GAZ D'ÉCHAPPEMENT, SYSTÈME D'AMENÉE D'AIR DE SURALIMENTATION ET UTILISATION DE L'ÉCHANGEUR THERMIQUE

(30) Priorität: 28.02.2007 DE 102007010134
(43) Veröffentlichungstag der Anmeldung: 09.12.2009
(73) Patentinhaber: Behr GmbH & Co. KG, 70469 Stuttgart (DE)
(72) Erfinder: GÄNSLER, Michael, 73733 Esslingen (DE); GRUDEN, Igor, 71254 Ditzingen (DE); WADER, Heiko, 71364 Winnenden (DE); WELLER, Wolfgang, 71364 Winnenden (DE); VON ESEBECK, Götz, Tokyo 145-0071 (JP); DANIELSSON, Dennie, Royal Oak, MI 48067 (US); NEHER, Stefan, 73084 Salach (DE); LANG, Claudia, 74232 Abstatt (DE); BLANKE, Reinhard, 70619 Stuttgart (DE)
(74) Vertreter: Grauel, Andreas
(86) Internationale Anmeldenummer: PCT/EP2008/001531
(87) Internationale Veröffentlichungsnummer: WO 2008/104377

(56) Entgegenhaltungen:
- DE-A1- 10 204 107
- DE-A1- 19 927 607
- JP-A- 9 310 996
- JP-A- 2000 241 086
- US-A1- 2006 219 394

## Beschreibung

Die Erfindung betrifft einen Wärmetauscher zum Wärmetausch zwischen einem ersten Fluid und einem zweiten Fluid gemäß dem Oberbegriff von Anspruch 1.

Wärmetauscher der eingangs genannten Art haben die Aufgabe ein heißes erstes Fluids mit Hilfe eines kälteren zweiten Fluids zu kühlen, damit das erste Fluid, insbesondere ein Abgas oder eine Ladeluft, der Ansaugluft für eine Brennkraftmaschine, beispielsweise eines Motors, beigemischt werden kann. Das zweite Fluid ist in der Regel in Form eines Kühlmittels gebildet, welches vorzugsweise aus dem Kühlkreislauf der Brennkraftmaschine entnommen werden kann. Grundsätzlich ist es zur Steigerung eines thermodynamischen Wirkungsgrades anzustreben, dass die Abkühlung bis auf ein möglichst niedriges Temperaturniveau erfolgt. Es ist darüber hinaus bekannt, dass das Konzept gekühlter Abgasrückführung oder gekühlter Ladeluft zur Reduzierung von Schadstoffen, insbesondere Stickoxiden, im Abgas dient. Bedingt durch die erhöhten grundsätzlichen Anforderungen an einen Wärmetauscher als auch die Betriebsweise moderner Brennkraftmaschinen hat sich gezeigt, dass die Wärmetauscher zunehmend erhöhten mechanischen Spannungen aufgrund thermischer Belastungen ausgesetzt sind. Dies betrifft insbesondere den Bereich des Fluidanschlusses und des Blockabschlusselements, dies insbesondere im Bereich eines Eintritts des ersten Fluids in diesem Bereich sind das heiße erste Fluid und das kühlere zweite Fluid auf vergleichsweise engem Raum nah benachbart durch das Blockabschlusselement getrennt. Die dort durch unterschiedliche Temperaturen hervorgerufenen Spannungen beim Wärmetauscher haben in der Regel eine direkte Auswirkung auf die Lebensdauer des Wärmetauschers.

Dieses Problem hat sich insbesondere bei modernen Dieselmotoren als zunehmend gravierend erwiesen. Darüber hinaus hat sich jedoch auch bei anderen modernisierten Motorenkonzepten, z.B. auch bei Ottomotoren, das Problem von Thermospannungen im Rahmen zunehmend gesteigerter Leistungsdichten und einer erhöhten Dynamik beim Betrieb der Motoren als wichtig erwiesen. Es hat sich gezeigt, dass zunehmende Eingangsdrücke und Temperaturen bei gleichzeitig erhöhten Kühlraten, bzw. Temperaturdifferenzen, bei einem Wärmetauscher anzustreben sind, wobei gleichzeitig ein möglichst begrenzter Druckabfall erreicht werden soll. Dies soll zunehmend mit vergleichsweise preiswerten Materialien sowie grundsätzlich materialsparend und unter Berücksichtigung engerer Bauräume realisiert werden.

Diese Umstände verstärken die Problematik der thermisch bedingten Spannungen, insbesondere an Fügenähten, vor allem bei aneinandergrenzenden Bauteilen unterschiedlicher Dicke, wie dies bei dem eingangs genannten Fluidanschluss und dem Blockabschlusselement sowie dem Gehäuse der Fall ist. Das Blockabschlusselement dient grundsätzlich zur Trennung des vergleichsweise heißen ersten Fluids vom kühleren zweiten Fluid.

Bauformen des Standes der Technik sehen vor, dass der Fluidanschluss am Blockabschlusselement festgelegt ist. Bei dieser Art einer Bauform sind im Bereich oder am Blockabschlusselement vergleichsweise dünne Führungskanäle für das erste Fluid und vergleichsweise dicke Bauteile, wie das Gehäuse und der Fluidanschluss, nahe beieinander festgelegt. So sind denn bei Bauformen dieser Art unterschiedlichste Maßnahmen vorgeschlagen worden, um die thermisch bedingten Spannungen im Bereich des Blockabschlusselements zu reduzieren. Dazu gehören konstruktive Maßnahmen zur Realisierung des Blockabschlusselements, bzw. gegebenenfalls zur Realisierung einer Einheit aus Blockabschlusselement, Gehäuse und Fluidanschluss, als auch unterschiedlichste Füge- und Befestigungsarten des Blockabschlusselements und der angrenzenden Bauteile. Je nach verwendetem Material haben sich in diesem Bereich Schweiß- und/oder Lötverbindungen durchgesetzt.

Es hat sich gezeigt, dass die erhöhten Anforderungen an eine Bauteilfestigkeit und Lebensdauer eines Wärmetauschers, der erhöhten thermischen Spannungen ausgesetzt ist, mit Bauformen gemäß dem Stand der Technik nicht immer in genügender Weise erfüllt werden können. Problematisch ist insbesondere der oben erläuterte Bereich der Anbindung von Fluidanschluss, Blockabschlusselement und Gehäuse.

An dieser Stelle setzt die Erfindung an, deren Aufgabe es ist, einen Wärmetauscher der eingangs genannten Art sowie eine Vorrichtung und eine Verwendung der eingangs genannten Art anzugeben, mit der mechanische Spannungen, insbesondere solche bedingt durch thermische Belastungen, vermindert sind. Insbesondere soll dies auch für erhöhte Belastungs- und Betriebszustände von modernen Motoren, insbesondere Dieselmotoren, ermöglicht werden und so zu einer längeren Lebensdauer eines Wärmetauschers führen.

Betreffend den Wärmetauscher wird die Aufgabe durch die Erfindung mit einem Wärmetauscher der eingangs genannten Art gelöst, bei dem erfindungsgemäß das Gehäuse zur Anbindung des Blocks an den Fluidanschluss vorgesehen ist.

Die Erfindung geht von der Überlegung aus, dass eine grundsätzlich sinnvolle Festlegung des Fluidanschlusses am Blockabschlusselement hinsichtlich der durch thermische Spannungen aufgeworfenen Problematik, insbesondere bei Fügenähten, nicht in jeder Hinsicht vorteilhaft ist. Die Erfindung hat erkannt, dass zum einen der Fluidanschluss für das erste Fluid als auch das Blockabschlusselement zur Trennung der Kammer und des Fluidanschlusses bzw. eines Innenraumes des Fluidanschlusses, nicht nur unterschiedlichen Temperaturniveaus ausgesetzt sind, sondern zum anderen der Fluidanschluss des Blockabschlusselements und das Gehäuse funktionsbedingt unterschiedliche Materialstärken und Materialbeschaffenheiten haben. Das Konzept verfolgt in vorteilhafter Kombination zur Auflösung der eingangs genannten Problematik zwei grundsätzliche Vorgehensweisen. Zum einen soll eine Anbindung des Fluidanschlusses räumlich getrennt von einer Anbindung des Blockabschlusselements sein und zum anderen soll die Anbindung der genannten Teile an einem vergleichsweise materialstarken Teil erfolgen. Dadurch wird zum einen die Wirkung erreicht, dass auftretende Temperaturunterschiede räumlich weitestgehend voneinander getrennt sind und zum anderen einer vergleichsweise erhöhten Masse an Material ausgesetzt sind. In vorteilhafter Zusammenwirkung dieser beiden Vorgehensweisen sind die thermischen Spannungen zur Anbindung des Blockabschlusselements und des Fluidanschlusses im Vergleich zu den aus dem Stand der Technik bekannten Bauformen eines Wärmetauschers grundsätzlich verringert. Mit anderen Worten, das Konzept der Erfindung geht nicht davon aus, das Blockabschlusselement zur Anbindung des Blocks an den Fluidanschluss zu verwenden, sondern es dient vorliegend das Gehäuse zur Anbindung des Blocks an den Fluidanschluss. Sowohl das Gehäuse als auch der Fluidanschluss sind vergleichsweise materialstarke Bauteile, so dass eine entsprechende Fügeverbindung zwischen diesen Bauteilen nicht nur verstärkt ausgeführt werden kann, sondern auch einen erhöhten Materialbestand zur Aufnahme von hohen Temperaturbelastungen hat. Das Konzept der Erfindung erreicht, dass sich thermische Ausdehnungen des Blockabschlusselements und des Fluidanschlusses nicht mehr unmittelbar summieren bzw. überlagern, sondern vielmehr durch die Anbindung des Fluidanschlusses am Gehäuse räumlich weitestgehend getrennt voneinander erfolgen.

Vorteilhafte Weiterbildungen der Erfindung sind den Unteransprüchen zu entnehmen und geben im einzelnen vorteilhafte Möglichkeiten an, das oben erläuterte Konzept im Rahmen der Aufgabenstellung, sowie hinsichtlich weiterer Vorteile zu realisieren.

Grundsätzlich hat sich das Konzept der Erfindung bei Wärmetauschern unterschiedlichster Bauart und Eignung als vorteilhaft erwiesen. Besonders effizient erweist sich das Konzept darüber hinaus bei Wärmetauschern, die durch ein Bloclcabschlusselement eine fluiddichte Trennung der Kammer und des Fluidanschlusses gewährleisten. Solche und bauähnliche Wärmetauscher sehen vorzugsweise vor, dass der Block eine Anzahl von Strömungskanälen aufweist, die von dem ersten Fluid durchströmbar sind. Vorzugsweise dient dazu das Gehäuse zur Aufnahme der Strömungskanäle.

Eine besonders bevorzugte Bauform sieht vor, dass das Blockabschlusselement -auch als Boden bezeichnet- mit einer oder mit mehreren Durchgangsöffnungen für Strömungskanäle versehen ist, die von dem ersten Fluid durchströmbar sind. Der Fluidanschluss ist vorzugsweise mit den Strömungskanälen strömungsverbunden. Der Fluidanschluss kann grundsätzlich in Form eines Diffusors, gebildet sein Das Konzept der Erfindung ist vorzugsweise bei einem Eintrittsdiffusor realisiert, da sich gerade im Eintrittsbereich des ersten Fluids die eingangs genannten Probleme als besonders gravierend erweisen. Darüber hinaus ist es jedoch auch möglich, das Konzept der Erfindung bei einem Austrittsdiffusor zu realisieren.

Ebenfalls erweist sich das Konzept als geeignet für Wärmetauscher, bei denen jeweils ein separates in Bezug auf das erste Fluid eintrittsseitige und austrittsseitige Blockabschlusselement vorgesehen ist. Zusätzlich oder als Alternative kann ein einzelnes Blockabschlusselement sowohl einen Eintrittsbereich als auch einen Austrittsbereich für das erste Fluid aufweisen.

Die Anbindung des Blocks an den Fluidanschluss erfolgt vorzugsweise im Rahmen einer stoffschlüssigen Verbindung, vorzugsweise mit einer Schweißverbindung und/oder einer Lötverbindung. Gerade bei modernen und hochbelasteten Wärmetauscherbauformen wird der Diffusor, insbesondere ein Eintrittsdiffusor, vergleichsweise heiß. Dazu kann es vorteilhaft sein, den Diffusor aus Metall, insbesondere Edelstahl, auszubilden. In diesem Zusammenhang ist der Diffusor am Gehäuse vorzugsweise festgeschweißt. Eine Schweißverbindung kann vorzugsweise als Laserschweißverbindung gebildet sein.

Insbesondere bei den vorgenannten, jedoch auch bei anderen hier nicht genannten Bauformen eines Wärmetauschers ist es gemäß einer Weiterbildung der Erfindung besonders vorteilhaft, dass der Fluidanschluss, insbesondere ein Diffusor, bei einer Außenseite des Gehäuses und/oder das Blockabschlusselement an einer Innenseite des Gehäuses festgelegt ist. Dadurch sind die Festlegungsstellen, also die Stelle einer Schweißnaht und/oder die Stelle einer Lötnaht, mindestens durch die Gehäusewand voneinander beabstandet, so dass die größten Temperaturunterschiede zur Erzeugung thermisch bedingter mechanischer Spannungen nicht unmittelbar am Blockabschlusselement auftreten, sondern vielmehr in vorteilhafter Weise durch das materialstärkere Gehäuse getragen werden und räumlich getrennt sind. Der Fluidanschluss ist nur an der Außenseite des Gehäuses festgelegt und das Blockabschlusselement nur an der Innenseite des Gehäuses festgelegt. Die Festlegungsart betrifft, wie erläutert, besonders bevorzugt eine Schweißverbindung und/oder eine Lötverbindung, kann jedoch auch andere stoffschlüssige Festlegungsarten und gegebenenfalls auch nicht-stoffschlüssige Festlegungsarten vorteilhaft betreffen.

Das Blockabschlusselement ist an einer zweiten Stelle des Gehäuses festgelegt und der Fluidanschluss an einer ersten Stelle des Gehäuses festgelegt, wobei entlang einer longitudinalen Erstreckung des Gehäuses, d.h. in der Regel in einer Strömungsrichtung des ersten Fluids, die erste Stelle und die zweite Stelle voneinander beabstandet sind. Dies hat den Vorteil, dass die Festlegungsstellen des Blockabschlusselements und des Fluidanschlusses, also beispielsweise zwei Schweißnähte, nicht nur durch die Gehäusewand voneinander getrennt sind, sondern darüber hinaus auch durch einen nochmals größer gestaltbaren longitudinalen Abstand getrennt sein können. Vorzugsweise ist die zweite Stelle dem Ende des Gehäuses näher als die erste Stelle. Mit anderen Worten, vorzugsweise ist der Fluidanschluss dem Gehäuse übergestülpt.

Im Rahmen der Erfindung sind eine erste und eine zweige Stelle weiter voneinander entfernt angeordnet als eine Dicke eines Blockabschlusselements in longitudinaler Erstreckung. Vorzugsweise kann die Entfernung der ersten und zweiten Stelle auch größer sein als ein Endabschnitt von Strömungskanälen. Dies führt vorzugsweise zu einer praktisch völligen Entkopplung der Fügestelle des Fluidanschlusses am Gehäuse einerseits von einem besonders filigran und mit hohen thermischen Spannungen behafteten Bereich der Anbindung des Blockabschlusselements am Gehäuse andererseits. Mit anderen Worten, im Rahmen dieser und anderer Weiterbildungen erstreckt sich ein Festlegungsbereich, innerhalb dem das Blockabschlusselement und der Fluidanschluss festgelegt ist, von einem Ende des Gehäuses entlang einer longitudinalen Erstreckung des Gehäuses in Strömungsrichtung des ersten Fluids. Der Festlegungsbereich erstreckt sich vorteilhaft wenigstens über die zweite Stelle hinaus.

Gemäß einer weiteren besonders bevorzugten Weiterbildung der Erfindung ist eine Wandstärke des Gehäuses im Festlegungsbereich dicker ausgeführt als eine Wandstärke in einem zum Festlegungsbereich angrenzenden Bereich. Zusätzlich oder alternativ kann das Gehäuse im Festlegungsbereich verstärkt sein. Zusätzlich oder alternativ kann das Gehäuse im Festlegungsbereich thermische Ausgleichsmittel aufweisen, wie beispielsweise Kanäle, Rippen oder sonstige Mittel zur effektiven Wärmeableitung und Entlastung bei thermischen Spannungen. Geeignet sind auch Sicken, Nuten, Fulzen oder sonstige Bereiche zum Ausgleich von Dehnungen und/oder Spannungen.

Vorzugsweise ist die Wand des Gehäuses vom Festlegungsbereich zum angrenzenden Bereich hin gekrümmt. Insbesondere kann sich das Gehäuse vom Festlegungsbereich zum angrenzenden Bereich hin verjüngen. Es hat sich gezeigt, dass diese konstruktive Ausgestaltung des Festlegungsbereichs eine besonders effektive Anpassung des Gehäuses an thermisch bedingte Lageveränderungen ermöglicht.

Ein Strömungskanal, vorzugsweise für das erste Fluid, kann grundsätzlich auf unterschiedliche Weise gebildet sein. Das Konzept der Erfindung ist besonders bevorzugt geeignet für einen Wärmetauscher mit einem Strömungskanal für das erste Fluid, der in Form eines Rohres gebildet ist. Das Konzept der Erfindung lässt sich jedoch auch anwenden auf einen Wärmetauscher, bei dem ein Strömungskanal, vorzugsweise für das zweite Fluid, in Form von aufeinandergefügten Scheiben gebildet ist. Diese und andere Strömungskanäle können vorteilhaft ein Wärmeleitelement aufweisen, insbesondere in Form eine Rippe, vorzugsweise in Form einer an einer Kanalinnenseite angebrachten Innenrippe und/oder in Form einer an einer Kanalaußenseite angebrachten Außenrippe. Ein Wärmetauscher kann zur Verbesserung des Wärmeübergangs zwischen dem ersten Fluid und dem zweiten Fluid auch eine Strömungsleiteinrichtung aufweisen, insbesondere eine Turbulenzeinrichtung, welche in der Regel eine verbesserte Fluid konvektion unterstützen.

Das Konzept der Erfindung hat sich besonders bewährt bei einem Wärmetauscher in Form eines Abgaswärmetauschers, insbesondere eines Abgaskühlers. Gleichermaßen kann das Konzept der Erfindung darüber hinaus auch Anwendung finden für einen Wärmetauscher in Form eines direkten oder indirekten Ladeluftwärmetauschers, insbesondere Ladeluftkühlers.

Die Erfindung führt, betreffend die Vorrichtung, auch auf ein Abgasrückführsystem für eine Brennkraftmaschine aufweisend eine Abgasrückführung, einen Kompressor und gemäß dem Konzept der Erfindung eine Wärmetauscher der oben erläuterten Art in Form eines Abgaswärmetauschers, insbesondere eines Abgaskühlers.

Weiter führt das Konzept der Erfindung auf ein Ladeluftzuführsystem für eine Brennkraftmaschine, aufweisend eine Ladeluftansaugung, ein Luftfilter, ein Kompressor und, gemäß dem Konzept der Erfindung, einen Wärmetauscher der oben erläuterten Art in Form eines Ladeluftwärmetauschers, insbesondere Ladeluftkühlers.

Betreffend die Verwendung hat sich das Konzept der Erfindung als vorteilhaft erwiesen für eine Verwendung des Wärmetauschers für eine Brennkraftmaschine in Form eines Dieselmotors eines Kraftfahrzeuges insbesondere in Form eines schweren Nutzfahrzeuges.

Insgesamt bewirkt das Konzept der Erfindung aufgrund der konstruktiven Beabstandung vom Fluidanschluss und Blockabschlusselement durch das Gehäuse eine höhere Lebensdauer eines Wärmetauschers und führt allgemein zu einer höheren Belastungsgrenze im Vergleich zu Ausführungen eines Wärmetauschers gemäß dem Stand der Technik. Damit können weitere Einsatzgebiete für einen Wärmetauscher erschlossen werden bzw. höhere Kundenanforderungen gewährleistet werden.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Vorteilhaft ist, dass eine stoffschlüssige Fügeverbindung in Form einer Lotverbindung und/oder Schweißverbindung, insbesondere Laserschweißverbindung, gebildet ist.

Vorteilhaft ist, dass ein Strömungskanal, vorzugsweise für das erste Fluid, in Form eines Rohres gebildet ist.

Vorteilhaft ist, dass ein Strömungskanal, vorzugsweise für das zweite Fluid, in Form von aufeinander gefügten Scheiben gebildet ist.

Vorteilhaft ist, dass ein Strömungskanal ein Wärmeleitelement aufweist, insbesondere in Form einer Rippe, vorzugsweise in Form einer an einer Kanalinnenseite angebrachten Innenrippe und/oder in Form einer an einer Kanalaußenseite angebrachten Außenrippe.

Vorteilhaft ist ein Wärmetauscher, gekennzeichnet durch eine Strömungsleiteinrichtung, insbesondere eine Turbulenzeinrichtung.

Vorteilhaft ist ein Wärmetauscher in Form eines Abgas-Wärmetauschers, insbesondere -Kühlers.

Vorteilhaft ist ein Wärmetauscher in Form eines direkten oder indirekten Ladeluftwärmetauschers, insbesondere -Kühlers.

Vorteilhaft ist ein Abgasrückführsystem für eine Brennkraftmaschine, aufweisend eine Abgasrückführung, einen Kompressor und gekennzeichnet durch einen Wärmetauscher in Form eines Abgas-Wärmetauschers, insbesondere -Kühlers.

Vorteilhaft ist ein Ladeluftzuführsystem für eine Brennkraftmaschine, aufweisend eine Ladeluftansaugung, einen Luftfilter, einen Kompressor und gekennzeichnet durch einen Wärmetauscher in Form eines Ladeluft-Wärmetauschers, insbesondere -Kühlers.

Vorteilhaft ist, dass die Brennkraftmaschine in Form eines Dieselmotors und das Kraftfahrzeug in Form eines schweren Nutzkraftfahrzeugs gebildet ist.

Im einzelnen zeigt die Zeichnung in
- Fig. 1:: eine perspektivische Schnittansicht eines Wärmetauschers gemäß dem Stand der Technik;
- Fig. 2:: eine Teilschnitt-Seitenansicht mit Temperaturprofl eines Wärmetauscher nach Fig. 1;
- Fig. 3:: eine Schnittansicht eines Details des Festlegungsbereichs von-Gehäuse, Blockabschlusselement und Fluidanschluss bei einer Ausführungsform eines Wärmetauschers gemäß dem Konzept der Erfindung;
- Fig. 4:: eine perspektivische Teilansicht einer ersten besonders bevorzugten Ausführungsform eines Wärmetauschers gemäß dem Konzept der Erfindung entsprechend dem Detail in Fig. 3;
- Fig. 5:: eine perspektivische Teilansicht einer zweiten besonders bevorzugte Ausführungsform eines Wärmetauschers gemäß dem Konzept der Erfindung.

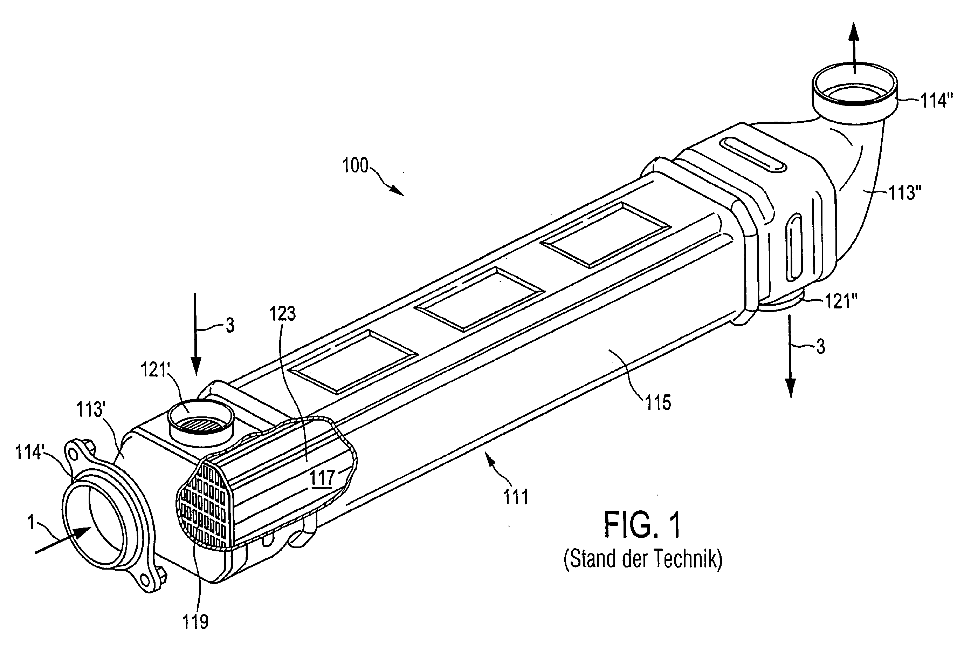

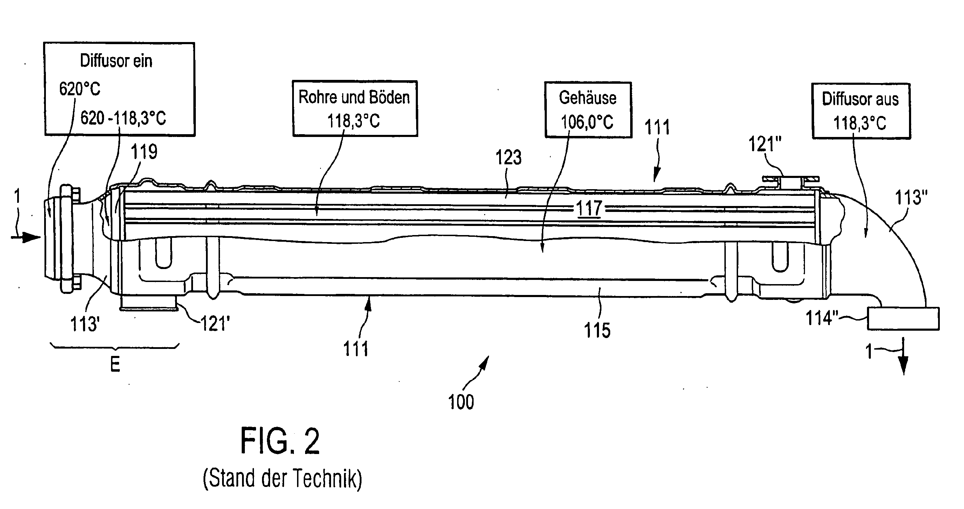

Fig.1 und Fig. 2 zeigen, zur Übersicht, einen Wärmetauscher 100 gemäß dem Stand der Technik in Form eines Abgaswärmetauschers zum Wärmetausch zwischen einem ersten Fluid 1 in Form eines Abgases und einem zweiten Fluid 3 in Form eines Kühlmittels. Der Wärmetauscher 100 weist dazu einen Block 111 zu voneinander getrennten und wärmetauschenden Führung des ersten Fluids 1 und des zweiten Fluids 3 auf sowie einen Fluidanschluss 113 für das erste Fluid 1. Ein Fluidanschluss 113 ist vorliegend einseits als ein Eintrittsdiffusors 113' bzw. anderseits als ein Austrittsdiffusor 113" gebildet, die jeweils über einen Flansch 114', 114" an die Peripherie eines nicht näher dargestellten Abgasrückführsystems anbindbar sind. Der Block 111 weist ein Gehäuse 115 mit einer von dem zweiten Fluid 3 durchströmbaren Kammer 117 auf sowie ein Blockabschlusselement 119 zur fluiddichten Trennung der Kammer 117 und eines Innenraums des Fluidanschlusses 113. Das Gehäuse 115 nimmt dazu in der Kammer 117 Strömungskanäle 123 auf, die von dem ersten Fluid 1 durchströmbar sind und über den Fluidanschluss 113 bespeist werden. Das Blockabschlusselement 119 in Form eines Bodens dient also zur fluiddichten Trennung des ersten Fluids 1 im Fluidanschluss 113 und den Strömungskanälen 123 sowie dem zweiten Fluid 3 in der Kammer 117. Das zweite Fluid wird über entsprechende Stutzen, nämlich einem Eingangstutzen 121' und einem Ausgangstutzen 121", der Kammer 117 zugeführt bzw. aus der Kammer 117 abgeführt.

Fig. 2 verdeutlicht das durch starke Temperaturunterschiede beim Betrieb eines Wärmetauschers 100 auftretende Problem mechanischer Spannungen, insbesondere bei einem in Form eines Eintrittsdiffusors 113' gebildeten Fluidanschluss 113. Wie aus den Temperaturangaben in Fig. 2 unmittelbar ersichtlich ist, besteht beim Betrieb des Wärmetauschers 100 in einem vergleichsweise kurzen Eintrittsbereich E der größte Temperaturgradient, der im Rahmen einer hier dargestellten modernen Verwendung des Wärmetauschers 100 typischer Weise einen Temperaturbereich zwischen etwa 620° C und etwa 120° C überdeckt, gegebenenfalls auch darüber hinaus. Dies ergibt sich aus der unmittelbaren Nähe einer mit heißem Abgas beaufschlagten Eintrittsdiffusors 113', welcher typischerweise bei Temperaturen im Bereich von 620° C liegt, und dem Eingangsstutzen 121' für das zweite Fluid 2, was zu einer Temperierung der Innenseite der Kammer 117 im eintrittsseitigen Bereich E bei etwa 120° C führt. Der in Fig. 2 rechts vom eintrittsseitigen Bereich E dargestellte Bereich der longitudinalen Erstreckung des Wärmetauschers 100 ist mit einem vergleichsweise geringen Temperaturgradienten, welcher Temperaturen zwischen 120° C und 100° C bei der hier dargestellten Ausführungsform überdeckt, beaufschlagt, so dass insbesondere am Austrittsdiffusor 113" die eingangs genannten Probleme nicht so gravierend sind wie beim Eintrittsdiffusor 113'.

Vorliegend ist, wie aus Fig. 2 ersichtlich, gemäß dem Stand der Technik der Eintrittsdiffusor 113' am Blockabschlusselement 119 in Form des Bodens festgelegt, welcher Boden wiederum die Strömungskanäle 123 hält und an der Innenseite des Gehäuses 115 festgelegt ist. Gemäß der in Fig. 2 dargestellten Ausführungsform eines Wärmetauschers 100 gemäß dem Stand der Technik dient also das Blockabschlusselement 119 in Form des Bodens zur Anbindung des Blocks 111 an den Fluidanschluss 113 in Form des Eintrittsdiffusors 113'. Das Blockabschlusselement 119 ist somit einer vergleichsweise hohen mechanischen Spannung aufgrund des im Eingangsbereich E herrschenden Temperaturgradienten ausgesetzt. Dieser Umstand ist direkt lebenszeitbegrenzend für einen Wärmetauscher 100 gemäß Fig. 1 und Fig. 2.

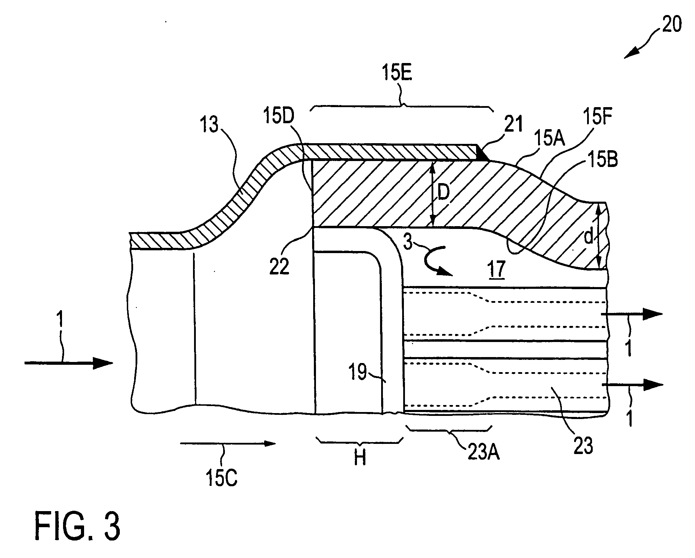

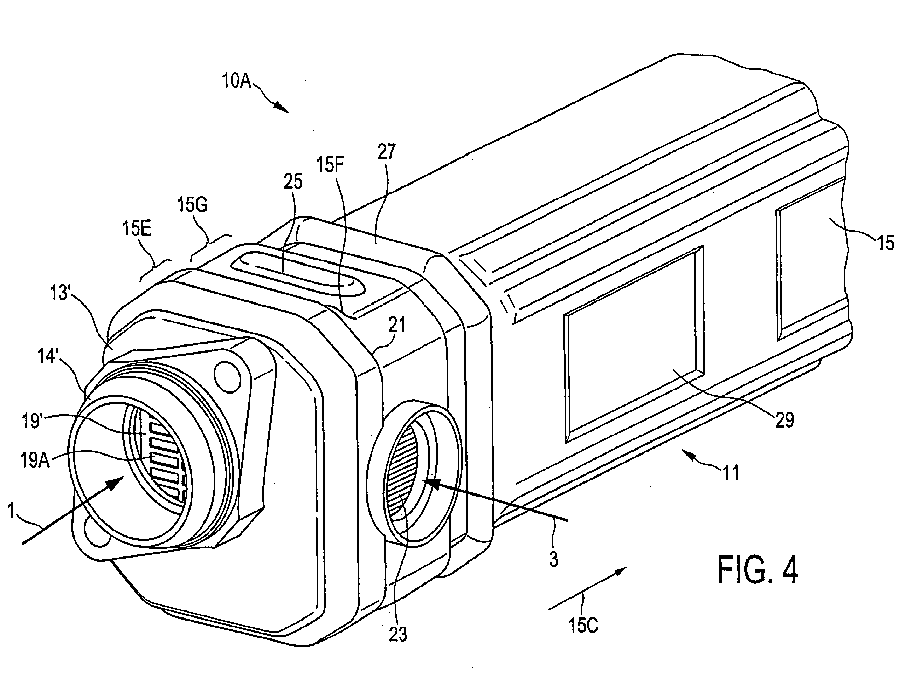

Fig. 3 zeigt einen Festlegungsbereich 20 für einen in Fig. 4 näher dargestellten Wärmetauscher 10A gemäß einer besonders bevorzugten Ausführungsform in Form eines Abgaskühlers, der zum Wärmetausch zwischen einem in Form eines Abgases gebildeten ersten Fluids 1 und einem in Form eines auf Wasser basierenden Kühlmittel gebildeten zweiten Fluids 3 vorgesehen ist. Der Wärmetauscher 10A weist einen in Fig. 4 weiter dargestellten Block 11 zur von einander getrennten und wärmetauschenden Führung des ersten Fluids 1 und des zweiten Fluids 3 auf, sowie eine Fluidanschluss 13 für das erste Fluid 1, welcher vorliegend in Form eines Diffusors gebildet ist. Der Block 11 weist ein in Fig. 4 weiter dargestelltes Gehäuse 15 sowie eine von dem zweiten Fluid 3 durchströmbare Kammer 17 und ein Blockabschlusselement 19, vorliegend in Form eines Bodens, auf, das zur fluiddichten Trennung der Kammer 17 und des Fluidanschlusses 13 dient. Bei dieser Ausführungsform ist vorliegend der in Form eines Diffusors gebildete Fluidanschluss 13 nur an eine Außenseite 15A des Gehäuses 15 festgelegt.

Das Blockabschlusselement 19, vorliegend in Form eines Bodens, ist nur an der Innenseite 15B des Gehäuses 15 festgelegt. Der Diffusor ist vorliegend durch eine Schweißnaht an einer ersten Stelle 21 an der Außenseite 15A des Gehäuses 15 festgelegt und der Boden ist an einer zweiten Stelle 22 an der Innenseite 15B des Gehäuses 15 durch eine Lötverbindung festgelegt. Bei dieser bevorzugten Ausführungsform sind die erste Stelle 21 und die zweite Stelle 22 entlang einer longitudinalen Erstreckung 15C des Gehäuses 15, welche im wesentlichen durch die Strömungsrichtung des ersten Fluids 1 festgelegt ist, voneinander beabstandet. Vorliegend ist die zweite Stelle 22 praktisch am Ende 15D des Gehäuses 15 gebildet, während die erste Stelle 21 vom Ende 15D des Gehäuses 15 entfernt gebildet ist. Zusätzlich ist bei dieser Ausführungsform der Festlegungsbereich 15E des Gehäuses 15 mit einer dickeren Wandstärke D ausgeführt im Vergleich zu einer übrigen Wandstärke d des Gehäuses 15 im übrigen angrenzenden Bereich, welcher sich jenseits des Festlegungsbereichs 15E ausschließt und in Fig. 4 dargestellt ist. Die Wand des Gehäuses 15 ist darüber hinaus vom Festlegungsbereich 15E zum angrenzenden Bereich hin mit einer Krümmung 15F versehen, so dass, insgesamt wie in Fig. 4 ersichtlich, sich das Gehäuse 15 vom Festlegungsbereich 15E zum angrenzenden Bereich 15G in Richtung der Longitudinalen Erstreckung 15C des Gehäuses 15 hin verjüngt.

Die Strömungskanäle 23 für das erste Fluid 1 sind vorliegend in Form von Wärmetauscherrohre gebildet. Ein Wärmetauscherrohre weist einen Endabschnitt 23A auf, der in eine in Fig. 4 näher dargestellte Durchgangsöffnung 19A des Bodens eingesetzt ist. Das Blockabschlusselement 19 in Form des Bodens weist dazu eine entsprechende Profitierung der Höhe H auf. Bei der vorliegenden Ausführungsform ist somit zusätzlich realisiert, dass die erste Stelle 21 und die zweite Stelle 22 voneinander soweit getrennt sind, dass der Abstand der beiden Stellen 21, 22 die Höhe H des Blockabschlusselements 19, den Endabschnitt 23A der Wärmetauscherrohre und deren Summe übersteigt. Dadurch wird eine besonders bevorzugte Entkopplung von Wärmeeinträgen erreicht, die einerseits im Bereich des Bodens auf der Innenseite 15B des Gehäuses 15 zum Tragen kommen und andererseits an der Außenseite 15A des Gehäuses 15. Die an der ersten Stelle 21 ausgeführte stoffflüssige Fügeanbindung in Form einer Schweißverbindung ist von der zweiten Stelle 22 besonders weit entfernt und darüber hinaus wird bei der vorliegenden Ausführungsform der Boden nicht zusätzlich mit einer Schweißverbindung für den Fluidanschluss 13 in Form des Diffusors belastet.

Fig. 4 zeigt, wie anhand von Fig. 3 bereits teilweise erläutert, eine erste Ausführungsform eines Wärmetauschers 10A gemäß der Erfindung, im eingangsseitigen Bereich E. Das Blockabschlusselement ist vorliegend als eingangsseitiger Boden 19' gebildet. Der Fluidanschluss in Form eines Eintrittsdiffusors 13' ist dem Gehäuse 15 übergestülpt, und zwar überlappen Gehäuse 15 und Eintrittsdiffusor 13' in einem oben erläuterten Festlegungsbereich 15E. Die sich anschließende Krümmung 15F verjüngt das Gehäuse zu einem angrenzenden Bereich 15G hin. Bei der in Fig. 4 dargestellten Ausführungsform eines Wärmetauschers 10A ist das Gehäuse 15 im angrenzenden Bereich 15G, im Bereich der Krümmung 15F und im Festlegungsbereich 15E mit einer in Fig. 3 näher dargestellten verdickten Wandstärke D ausgeführt. Dies wird in Fig. 4 durch die mittlere Schattierung im Unterschied zum weiteren Gehäuse 15 deutlich gemacht. Der Eintrittsdiffusor 13' ist mittels einem Flansch 14' an eine Peripherie eines nicht näher dargestellten Abgasrückführsystems angebunden.

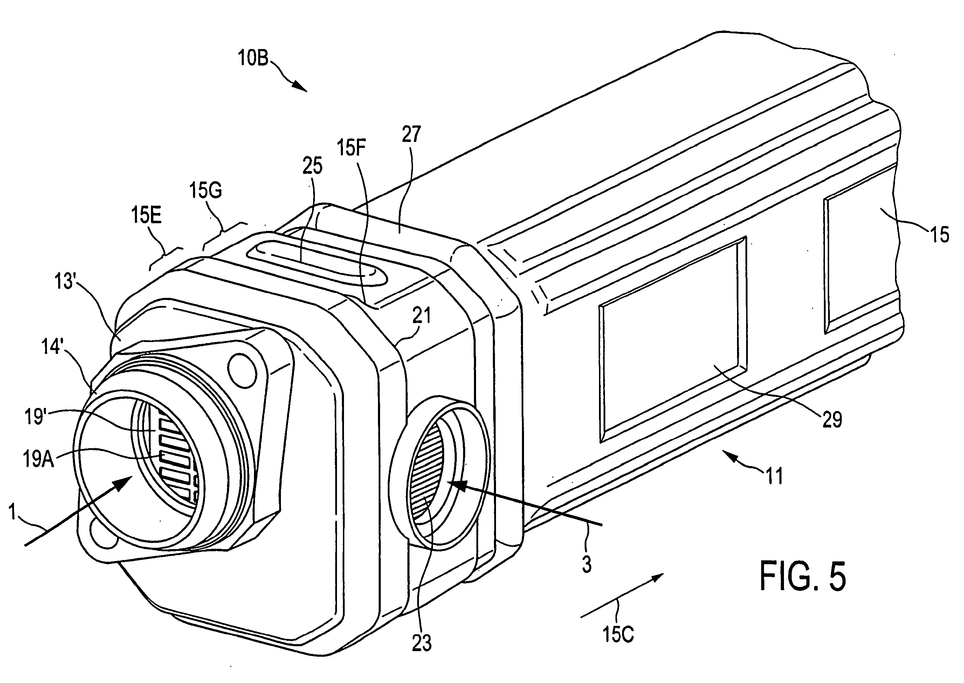

In Fig. 5 ist eine weitere ebenfalls vorteilhafte Ausführungsform eines Wärmetauschers 10B gezeigt, welche, - ansonsten wie in Fig. 4 und Fig. 3 ausgeführt - ohne eine zusätzliche Verdickung der Wandstärke des Gehäuses 15 im angrenzenden Bereich 15G im Bereich der Krümmung 15F und im Festlegungsbereich 15E auskommt. Die Ausführungsform eines Wärmetauschers 10B in Fig. 5 nutzt die bereits im Vergleich zum eingangsseitigen Boden 19' deutlich dicker ausgeführte Stärke des Gehäuses 15 um den Eintrittsdiffusor 13', analog zu Fig. 3 und Fig. 4, überzustülpen und mit einer Schweißnaht an der ersten Stelle 21 festzulegen.

Die Gehäuse 15 in Fig. 4 und Fig. 5 weisen jeweils eine Ausstülpung 25 und Auskragung 27 als zusätzliche thermische Ausgleichsmittel auf, die in der Lage sind, thermische Lageveränderungen und/oder Dimensionsänderungen des Gehäuses 15 relativ zum Eintrittsdiffusor 113' zu kompensieren und so die Schweißverbindung an der ersten Stelle 21 und eine weitere Fügeverbindung an der in Fig. 3 gezeigten zweiten Stelle 22 hinsichtlich thermisch bedingter Spannungen entlasten. Das Gehäuse 15 weist darüber hinaus Sicken 29 auf, die zur Versteifung dienen.

Die vorliegend in Bezug auf einen eingangsseitigen Bereich E beschriebenen Maßnahmen können ebenfalls im Bereich eines nicht näher dargestellten ausgangsseitigen Bodens 19" bei einer nicht näher dargestellten Ausführungsform allein oder in Kombination mit den oben genannten Merkmalen realisiert sein.

Zusammenfassend betrifft die Erfindung einen Wärmetauscher 10, insbesondere einen Abgaswärmetauscher oder Ladeluftwärmetauscher, zum Wärmetausch zwischen einem ersten Fluid 1, insbesondere einem Abgas oder einer Ladeluft und einem zweiten Fluid 3, insbesondere einem Kühlmittel, aufweisend: einen Block 11 zur voneinander getrennten und wärmetauschenden Führung des ersten 1 und zweiten Fluids 3, und einen Fluidanschluss 13 für das erste Fluid 1, welcher Block 11 ein Gehäuse 15 mit einer von dem zweiten Fluid 3 durchströmbaren Kammer 17, und ein Blockabschlusselement 19 zur vorzugsweise fluiddichten Trennung der Kammer 17 und des Fluidanschlusses 13, aufweist. Gemäß dem Konzept der Erfindung ist das Gehäuse 15 zur Anbindung des Blocks 11 an den Fluidanschluss 13 vorgesehen. Das Konzept sieht vor, dass nicht das Blockabschlusselement 19 zur Anbindung des Blocks 11 an den Fluidanschluss 13 vorgesehen ist, sondern vorzugsweise nur das Gehäuse 15. Dadurch werden Thermospannungen im Bereich der Blockanbindung vorteilhaft vermieden. Vorzugsweise kann das Gehäuse 15 im Bereich der Blockanbindung entsprechend verdickt sein. Vorzugsweise ist auch die Festlegungsstelle für das Blockabschlusselement 19 am Gehäuse 15 und die Festlegungsstelle für den Fluidanschluss 13 am Gehäuse 15 voneinander beabstandet.

## Patentansprüche

1. Wärmetauscher (10A, 10B), insbesondere Abgas-Wärmetauscher oder Ladeluft-Wärmetauscher, zum Wärmetausch zwischen einem ersten Fluid (1), insbesondere einem Abgas oder einer Ladeluft, und einem zweiten Fluid (3), insbesondere einem Kühlmittel, aufweisend:
- einen Block (11) zur voneinander getrennten und wärmetauschenden Führung des ersten (1) und zweiten Fluids (3), und
- einen Fluidanschluss (13) für das erste Fluid (1);
welcher Block (11)
ein Gehäuse (15) mit einer von dem zweiten Fluid (3) durchströmbaren Kammer (17), und
ein Blockabschlusselement (19) zur, vorzugsweise fluiddichten,Trennung der Kammer (17) und des Fluidanschlusses (13), aufweist, wobei der Fluidanschluss (13) nur an der Außenseite (15A) des Gehäuses (15) festgelegt ist, und das Blockabschlusselement (19) nur an der Innenseite (15B) des Gehäuses (15) festgelegt ist und das Blockabschlusselement (19) an einer zweiten Stelle (22) des Gehäuses (15) festgelegt ist und der Fluidanschluss (13) an einer ersten Stelle (21) des Gehäuses festgelegt ist,
**dadurch gekennzeichnet, dass**
das Gehäuse (15) zur Anbindung des Blocks (11) an den Fluidanschluss (13) vorgesehen ist, wobei entlang einer longitudinalen Erstreckung (15C) des Gehäuses (15) die erste Stelle (21) und die zweite Stelle (22) voneinander beabstandet sind, vorzugsweise die zweite Stelle (22) dem Ende (15D) des Gehäuses (15) näher ist als die erste Stelle (21), und die erste (21) und zweite Stelle (22) weiter voneinander entfernt sind als eine Dicke des Blockabschlusselements (19) in longitudinaler Erstreckung (15C), vorzugsweise als ein Endabschnitt (23A) von Strömungskanälen.

2. Wärmetauscher (10A, 10B) nach Anspruch 1.
**dadurch gekennzeichnet, dass**
der Block (11) eine Anzahl von Strömungskanälen (23) aufweist, die von dem ersten Fluid (1) durchströmbar sind.

3. Wärmetauscher (10A, 10B) nach Anspruch 2,
**dadurch gekennzeichnet, dass**
das Gehäuse (15) die Strömungskanäle (23) aufnimmt.

4. Wärmetauscher (10A, 10B) nach einem der Ansprüche 1 bis 3,
**dadurch gekennzeichnet, dass**
das Blockabschlusselement (19), vorzugsweise in Form eines Bodens, mit einer oder mit mehreren Durchgangsöffnungen (19A) für Strömungskanäle (23), die von dem ersten Fluid (1) durchströmbar sind, versehen ist.

5. Wärmetauscher (10A, 10B) nach einem der Ansprüche 1 bis 4,
**gekennzeichnet durch**
jeweils ein separates, in Bezug auf das erste Fluid (1), eintrittsseitiges Blockabschlusselement (19') und austrittsseitiges Blockabschlusselement (19") und/oder
ein Blockabschlusselement das einen Eintrittsbereich und einen Austrittsbereich für das erste Fluid (1) aufweist.

6. Wärmetauscher (10A, 10B) nach einem der Ansprüche 1 bis 5,
**dadurch gekennzeichnet, dass**
der Fluidanschluss (13) mit den Strömungskanälen strömungsverbunden ist.

7. Wärmetauscher (10A, 10B) nach einem der Ansprüche 1 bis 6,
**dadurch gekennzeichnet, dass**
der Fluidanschluss (13) in Form eines Diffusors, insbesondere eines Eintrittsdiffusors(13') und/oder Austrittsdiffusors (13"), gebildet ist.

8. Wärmetauscher (10A, 10B) nach einem der Ansprüche 1 bis 7,
**dadurch gekennzeichnet, dass**
der Fluidanschluss (13) an einer Aussenseite (15A) des Gehäuses (15) und/oder das Blockabschlusselement (19) an einer Innenseite (15B) des Gehäuses (15) festgelegt ist.

9. Wärmetauscher (10A) nach einem der Ansprüche 1 bis 8,
**dadurch gekennzeichnet, dass,**
eine Wandstärke (D) des Gehäuses (15) im Festlegungsbereich (15E) dicker ausgeführt ist als eine Wandstärke (d) in einem zum Festlegungsbereich (15E) angrenzenden Bereich und/oder das Gehäuse (15) im Festlegungsbereich(15E) verstärkt ist und/oder das Gehäuse (15) thermische Ausgleichsmittel aufweist.

10. Wärmetauscher (10A, 10B) nach einem der Ansprüche 1 bis 9,
**dadurch gekennzeichnet, dass**
die Wand des Gehäuses (15) vom Festlegungsbereich (15E) zum angrenzenden Bereich hin gekrümmt ist, vorzugsweise sich das Gehäuse (15) vom Festlegungsbereich(15E) zum angrenzenden Bereich hin verjüngt.

11. Wärmetauscher (10A, 10B) nach einem der Ansprüche 1 bis 10,
**dadurch gekennzeichnet, dass**
das Blockabschlusselement (19) und/oder der Fluidanschluss (13) mit einer stoffschlüssigen Fügeverbindung am Gehäuse (15) festgelegt ist.

12. Wärmetauscher (10A, 10B) nach einem der Ansprüche 1 bis 11,
**dadurch gekennzeichnet, dass**
eine stoffschlüssige Fügeverbindung in Form einer Lotverbindung und/oder Schweißverbindung, insbesondere Laserschweißverbindung, gebildet ist.

13. Wärmetauscher (10A, 10B) nach einem der Ansprüche 1 bis 12,
**dadurch gekennzeichnet, dass**
ein Strömungskanal (23), vorzugsweise für das erste Fluid (1), in Form eines Rohres gebildet ist.

14. Wärmetauscher nach einem der Ansprüche 1 bis 13,
**dadurch gekennzeichnet, dass,**
ein Strömungskanal, vorzugsweise für das zweite Fluid (3), in Form von aufeinander gefügten Scheiben gebildet ist.

15. Wärmetauscher (10A, 10B) nach einem der Ansprüche 1 bis 14,
**dadurch gekennzeichnet, dass,**
ein Strömungskanal (23) ein Wärmeleitelement aufweist, insbesondere in Form einer Rippe, vorzugsweise in Form einer an einer Kanalinnenseite angebrachten Innenrippe und/oder in Form einer an einer Kanalaußensefte angebrachten Außenrippe.

16. Wärmetauscher (10A, 10B) nach einem der Ansprüche 1 bis 15,
**gekennzeichnet durch**
eine Strömungsleiteinrichtung, insbesondere eine Turbulenzeinrichtung.

17. Wärmetauscher (10A, 10B) nach einem der Ansprüche 1 bis 16 in Form eines Abgas-Wärmetauschers, insbesondere -Kühlers.

18. Wärmetauscher nach einem der Ansprüche 1 bis 17 in Form eines direkten oder indirekten Ladeluftwärmetauschers, insbesondere -Kühlers.

19. Abgasrückführsystem für eine Brennkraftmaschine, aufweisend
eine Abgasrückführung, einen Kompressor und
**gekennzeichnet durch**
einen Wärmetauscher (10A, 10B) nach einem der Ansprüche 1 bis 18 in Form eines Abgas-Wärmetauschers, insbesondere - Kühlers.

20. Ladeluftzuführsystem für eine Brennkraftmaschine, aufweisend
eine Ladeluftansaugung, einen Luftfilter, einen Kompressor und **gekennzeichnet durch**
einen Wärmetauscher nach einem der Ansprüche 1 bis 18 in Form eines Ladeluft-Wärmetauschers, insbesondere -Kühlers.

21. Verwendung des Wärmetauschers (10A, 10B) nach einem der Ansprüche 1 bis 18 für eine Brennkraftmaschine eines Kraftfahrzeugs,
**dadurch gekennzeichnet, dass**
die Brennkraftmaschine in Form eines Dieselmotors und das Kraftfahrzeug in Form eines schweren Nutzkraftfahrzeugs gebildet ist.

## Claims

1. A heat exchanger (10A, 10B), particularly an exhaust gas heat exchanger or charge air heat exchanger, for heat transfer between a first fluid (1), particularly an exhaust gas or charge air, and a second fluid (3), particularly a coolant, comprising:
- a block (11) for separate and heat-exchanging guiding of the first (1) and second Fluid (3), sand
- a fluid connection (13) for the first fluid (1);
said block (11) having a housing (15) with the chamber (17), through which the second fluid flows (3), and
a block closure element (19) for the preferably fluid-tight separation of the chamber (17) and the fluid connection (13); the fluid connection (13) being fixed only to an outer surface (15A) of the housing (15), and the block closure element (19) being fixed only to the inner surface (15B) of the housing (15), and the block closure element (19) being fixed at a second point (22) of the housing (15) and the fluid connection (13) being fixed at a first point (21) of the housing,
**characterized in that** the housing (15) is provided for connecting the block (11) to the fluid connection (13), the first point (21) and the second point (22) being spaced apart along a longitudinal extension (15C) of the housing (15), preferably the second point (22) being closer to the end (15D) of the housing (15) than the first point (21), and the first (21) and second point (22) being spaced farther apart than a thickness of the block closure element (19) in the longitudinal extension (15C), preferably than an end section (23A) of the flow channels.

2. The heat exchanger (10at 10B) according to claim 1, **characterized in that** the block (11) has a number of flow channels (23), through which the first fluid (1) can flow.

3. The heat exchanger (10A, 10B) according to claim 2, **characterized in that** the housing (15) accommodates the flow channels (23).

4. The heat exchanger (10A, 10B) according to any one of claims 1 through 3, **characterized in that** the block closure element (19), preferably in the form of a base, is provided with one or more through openings (19A) for flow channels (23), through which the first fluid (1) can flow.

5. The heat exchanger (10A, 10B) according to any one of claims 1 through 4, **characterized by** a separate inlet-side block closure element (19') and outlet-side block closure element (19"), in retard to the first fluid (1), and/or a block closure element that has an inlet area and an outlet area for the first fluid (1).

6. The heat exchanger (10A, 10B) according to any one of claims 1 through 5, **characterized in that** the fluid connection (13) is fluidically connected to the flow channels.

7. The heat exchanger (10A, 10B) according to any one of claims 1 through 6, **characterized in that** the fluid connection (13) is formed as a diffuser, particularly an inlet diffuser (13') and/or outlet diffuser (13").

8. The heat exchanger (10A, 10B) according to any one of claims 1 through 7, **characterized in that** the fluid connection (13) is fixed to an outer surface (15A) of the housing (15) and/or the block closure element (19) is fixed to an inner surface (15B) of the housing (15).

9. The heat exchanger (10A) according to any one of claims 1 through 8, **characterized in that** a wall thickness (D) of the housing (15) in the fixing area (15E) is made thicker than a wall thickness (d) in an area adjacent to the fixing area (15E) and/or the housing (15) is reinforced in the fixing area (15E) and/or the housing (15) has thermal compensating means.

10. The heat exchanger (10A, 10B) according to any one of claims 1 through 9, **characterized in that** the will of the housing (15) is curved from the fixing area (15E) toward the adjacent area, preferably the housing (15) tapers from the fixing area (15E) to the adjacent area.

11. The heat exchanger (10A, 10B) according to any one of claims 1 through 10, **characterized in that** the block closure element (19) and/or the fluid connection (13) are fixed with an integral joining connection to the housing (15).

12. The heat exchanger (10A, 10B) according to any one of claims 1 through 11, **characterized in that** an integral joining connection is made in the form of a smoldered connection and/or welded connection, particularly a MIG/MAG welded connection or a laser welded connection.

13. The heat exchanger (10A, 10B) according to any one of claims 1 through 12, **characterized in that** a flow channel (23), preferably for the first fluid (1), is made in the shape of a tube.

14. The heat exchanger according to any one of claims 1 through 13, **characterized in that** a flow channel, preferably for the second Fluid (1), is made in the shape of plates joined one on top of another.

15. The heat exchanger (10A, 10B) according to any one of claims 1 through 14, **characterized in that** a flow channel (23) has a heat-conducting member, particularly in the form of a fin, preferably in the form of an inner fin attached to a channel inner surface and/or in the form of an outer fin attached to a channel outer surface.

16. The heat exchanger (10A, 10B) according to any one of claims 1 through 15, **characterized by** a flow guidance device, particularly a turbulence devise.

17. The heat exchanger (10A, 10B) according to any one of claims 1 through 16 in the form of an exhaust gas heat exchanger, particularly exhaust gas cooler.

18. The heat exchanger according to any one of claims 1 through 17 in the form of a direct or indirect charge air heat exchanger, particularly charge air coolers

19. An exhaust gas recirculation system for an internal combustion engine, having exhaust gas recirculation and a compressor, and **characterized by** a heat exchanger (10A, 10B) according to any one of claims 1 through 18 in the form of an exhaust gas heat exchanger, particularly exhaust gas cooler.

20. A charge air supply system for an internal combustion engine, having a charge air intake, an air filter, and a compressors, and **characterized by** a heat exchanger (10A, 10B) according to any one of claims 1 through 18 in the form of a charge air heat exchanger, particularly charge air coolers

21. Use of the heat exchanger (10A, 10B) according to any one of claims 1 through 18 for an internal combustion engine in a motor vehicle, **characterized in that** the internal combustion engine is made in the form of a diesel engine, and particularly the motor vehicle in the form of a heavy-duty utility vehicle.

## Revendications

1. Echangeur de chaleur (10A, 10B), en particulier échangeur de chaleur de gaz d'échappement ou échangeur de chaleur, d'air de suralimentation, servant à l'échange de chaleur entre un premier fluide (1), en particulier des gaz d'échappement ou un air de suralimentation, et un deuxième fluide (3), en particulier un liquide de refroidissement, présentant :
- une bloc (11) servant au guidage du premier fluide (1) et du deuxième fluide (3), se produisant séparément l'un de l'autre et échangeant de la chaleur, et
- un raccord de fluide (13) pour le premier fluide (1) ; lequel bloc (11) présente
un carter (15) comportant une chambre (17) pouvant être traversée par le deuxième fluide (3), et
un élément de fermeture (19) du bloc servant à la séparation, de préférence étanche aux fluides, de la chambre (17) et du raccord de fluide (13), où le raccord de fluide (13) est fixé seulement sur le côté extérieur (15A) du carter (15), et l'élément de fermeture (19) du bloc est fixé seulement sur le côté intérieur (15B) du carter (15), et l'élément de fermeture (19) du bloc est fixé au niveau d'un deuxième emplacement (22) du carter (15), et le raccord de fluide (13) est fixé au niveau d'un premier emplacement (21) du carter,
**caractérisé en ce que** le carter (15) est prévu pour relier le bloc (11) au raccord de fluide (13) où, en suivant une étendue longitudinal (15C) du carter (15), le premier emplacement (21) et le deuxième emplacement (22) sont espacés l'un de l'autre, de préférence le deuxième emplacement (22) est plus proche de l'extrémité (15D) du carter (15) que le premier emplacement (21), et le premier emplacement (21) et le deuxième emplacement (22) sont espacés l'un de l'autre sur une distance supérieure à une épaisseur de l'élément de fermeture (19) du bloc considérée suivant une étendue longitudinale (15C), de préférence supérieure à une partie d'extrémité (23A) de conduits d'écoulement.

2. Echangeur de chaleur (10A, 10B) selon la revendication 1, **caractérisé en ce que** le bloc (11) présente une certaine quantité de conduits d'écoulement (23) qui peuvent être traversés par le premier fluide (1).

3. Echangeur de chaleur (10A, 10B) selon la revendication 2, **caractérisé en ce que** le carter (15) loge les conduits d'écoulement (23).

4. Echangeur de chaleur (10A, 10B) selon l'une quelconque des revendications 1 à 3, **caractérisé en ce que** l'élément de fermeture (19) du bloc, se présentant de préférence sous la forme d'un fond, est doté d'une ou de plusieurs ouvertures de passage (19A) pour des conduits d'écoulement (23) qui peuvent être traversés par le premier fluide (1).

5. Echangeur de chaleur (10A, 10B) selon l'une quelconque des revendications 1 à 4, caractérisé,
respectivement, par un élément de fermeture (19') du bloc, côté entrée, et par un élément de fermeture (19") du bloc, côté sortie, séparés par rapport au premier fluide (1), et / ou
par un élément de fermeture du bloc qui présente une zone d'entrée et une zone de sortie pour le premier fluide (1).

6. Echangeur de chaleur (10A, 10B) selon l'une quelconque des revendications 1 à 5, **caractérisé en ce que** le raccord de fluide (13) est relié, concernant l'écoulement, aux conduits d'écoulement.

7. Echangeur de chaleur (10A, 10B) selon l'une quelconque des revendications 1 à 6, **caractérisé en ce que** le raccord de fluide (13) est conçu sous la forme d'un diffuseur, en particulier d'un diffuseur d'entrée (13') et / ou d'un diffuseur de sortie (13").

8. Echangeur de chaleur (10A, 10B) selon l'une quelconque des revendications 1 à 7, **caractérisé en ce que** le raccord de fluide (13) est fixé sur un côté extérieur (15A) du carter (15) et / ou l'élément de fermeture (19) du bloc est fixé sur un côté intérieur (15B) du carter (15).

9. Echangeur de chaleur (10A) selon l'une quelconque der revendications 1 à **caractérisé en ce qu'**une épaisseur de paroi (D) du carter (15) est réalisée, dans la zone de fixation (15E), en étant plus épaisse qu'une épaisseur de paroi (d) située dans une zone contiguë à la zone de fixation (15E), est / ou le carter (15) est renforcé dans la zone de fixation (15E), et / ou le carter (15) présente des éléments de compensation thermiques.

10. Echangeur de chaleur (10A, 10B) selon l'une quelconque des revendications 1 à 9, **caractérisé en ce que** la paroi du carter (15) est courbée en partant de la zone de fixation (15E) jusqu'à la zone contiguë, de préférence le carter (15) va en diminuant depuis la zone de fixation (15E) jusqu'à la zone contiguë.

11. Echangeur de chaleur (10A, 10B) selon l'une quelconque des revendications 1 à 10, **caractérisé en ce que** l'élément de fermeture (19) du bloc et / ou le raccord de fluide (13) est fixé sur le carter (15) par un assemblage jointé, réalisé par continuité de matière.

12. Echangeur de chaleur (10A, 10B) selon l'une quelconque des revendications 1 à 11, **caractérisé en ce qu'**un assemblage jointé, réalisé par continuité de matière, est configuré sous la forme d'un assemblage brasé et / ou d'un assemblage soudé, en particulier d'un assemblage soudé au laser.

13. Echangeur de chaleur (10A, 10B) selon l'une quelconque des revendications 1 à 12, **caractérisé en ce qu'**un conduit d'écoulement (23), de préférence pour le premier fluide (1), est configuré sous la forme d'un tube.

14. Echangeur de chaleur selon l'une quelconque des revendications 1 à 13, **caractérisé en ce qu'**un conduit d'écoulement, de préférence pour le deuxième fluide (3), est configuré sous la forme de plaques jointées, empilées les unes sur les autres.

15. Echangeur de chaleur (10A, 10B) selon l'une quelconque des revendications 1 à 14, **caractérisé en ce qu'**un conduit d'écoulement (23) comporte un élément conducteur de la chaleur, se présentant en particulier sous la forme d'une ailette, de préférence sous la forme d'une ailette intérieure fixée sur un côté intérieur du conduit et / ou sous la forme d'une ailette extérieure fixée sur un côté extérieur du conduit.

16. Echangeur de chaleur (10A, 10B) selon l'une quelconque des revendications 1 à 15, **caractérisé par** un dispositif déflecteur de l'écoulement, en particulier un dispositif à turbulences.

17. Echangeur de chaleur (10A, 10B) selon l'une quelconque des revendications 1 à 16, se présentant sous la forme d'un échangeur de chaleur de gaz d'échappement, en particulier d'un refroidisseur de gaz d'échappement.

18. Echangeur de chaleur selon l'une quelconque des revendications 1 à 17, se présentant sous la forme d'un échangeur de chaleur d'air de suralimentation direct ou indirect, en particulier d'un refroidisseur d'air de suralimentation.

19. Système de recyclage des gaz d'échappement pour un moteur à combustion interne, présentant un recyclage des gaz d'échappement, un compresseur et
**caractérisé par**
un échangeur de chaleur (10A, 10B) selon l'une quelconque des revendications 1 à 18, se présentant sous la forme d'un échangeur de chaleur de gaz d'échappement, en particulier d'un refroidisseur de gaz d'échappement.

20. Système d'amenée d'air de suralimentation pour un moteur à combustion interne, présentant une aspiration de l'air de suralimentation, un filtre à air, un compresseur et
**caractérisé par**
un échangeur de chaleur selon l'une quelconque des revendications 1 à 18, se présentant sous la forme d'un échangeur de chaleur d'air de suralimentation, en particulier d'un refroidisseur d'air de suralimentation.

21. Utilisation de l'échangeur de chaleur (10A, 10B) selon l'une quelconque des revendications 1 à 18, pour un moteur à combustion interné d'un véhicule automobile,
**caractérisé en ce que**
le moteur à combustion interne est conçu sous la forme d'un moteur diesel, le véhicule automobile étant conçu sous la forme zon véhicule utilitaire lourd.
